# EUROPÄISCHE PATENTSCHRIFT

(11) **EP 2 578 996 B1**
(45) Veröffentlichungstag und Bekanntmachung des Hinweises auf die Patenterteilung: **17.10.2018**
(21) Anmeldenummer: 12197912.4
(22) Anmeldetag: 13.02.2009
(51) Int. Cl.: G01C 21/32, G01C 21/28, G01C 21/36, B60W 30/08, B60W 30/095

(54) **Fahrzeugsystem zur Navigation und/oder Fahrerassistenz**
Vehicle system for navigating and/or driver assistance
Système de véhicule destiné à la navigation et/ou l'assistance au conducteur

(30) Priorität: 15.02.2008 DE 102008009463; 15.02.2008 DE 102008009464; 22.02.2008 DE 102008010666; 15.10.2008 DE 102008051776
(43) Veröffentlichungstag der Anmeldung: 10.04.2013
(62) Teilanmeldung aus: 09709998.0
(73) Patentinhaber: Continental Teves AG & Co. OHG, 60488 Frankfurt am Main (DE)
(72) Erfinder: Stählin, Ulrich, 65760 Eschborn (DE); Grotendorst, Thomas, 65760 Eschborn (DE); Gee, Robert, Lake Barrington, 60010 (US)

(56) Entgegenhaltungen:
- EP-A2- 0 921 509
- WO-A1-2007/065725
- WO-A1-2009/074206

## Beschreibung

### Gebiet der Erfindung

Die Erfindung betrifft die Assistenz-, Sicherheits- und Navigationstechnik für Fahrzeuge. Insbesondere betrifft die Erfindung ein Fahrzeugsystem und ein Verfahren zum Steuern des Fahrzeugsystems.

### Technologischer Hintergrund

Es existieren bereits Fahrerassistenzsysteme zur Unterstützung des Fahrers beim Führen eines Fahrzeugs sowie Navigationssysteme zum Führen eines Fahrers bzw. eines Fahrzeugs von einem Ausgangspunkt zu einem gewünschten Ziel. Über einen von Navigationssystemen erstellten ADAS-Horizont (ADAS = "Advanced Driver Assistance System" / Fahrerassistenzsystem) können Straßenverlauf, Beschilderung, usw. im Umfeld des Fahrzeugs an Fahrerassistenzsysteme übermittelt werden. Auf diese Weise wird eine frühzeitige Reaktion des Fahrers oder des Fahrerassistenzsystems auf vorausliegende Gefahren oder Verkehrssituationen möglich.

Die WO 2007/065725 A1 beschreibt einerseits eine in einer Datenbank gespeicherte Karte, welche durch Überschreiben beständig aktualisiert wird, und ein Navigationssystem und System zum Überwachen eines Fahrkorridors unter Verwendung von Fahrdynamik-Sensorik zur verbesserten Lokalisierung des Fortbewegungsmittels.

Die EP 0 921 509 A2 offenbart ein System zum Aktualisieren, Verbessern und Weiterentwickeln einer geographischen Datenbasis, welche Objekte einer geographischen Region sowie ggf. Objekteigenschaften dieser Objekte beschreibt. Bei der Datenbasis handelt es sich um eine fahrzeugexterne und zentrale Datenbasis. Mittels Datensammelfahrzeugen, die mit unterschiedlicher Art von Sensorik ausgestattet sind, werden dabei geographische Daten erfasst und über geeignete Datenverbindungen an die Datenbasis übertragen. Eine lokale Kopie der in der Datenbasis enthaltenen Daten kann auch in den Fahrzeugen abgelegt sein.

Aus der nachveröffentlichten WO 2009/074206 A1 geht ein Verfahren zum Betrieb eines Navigationssystems hervor, wobei durch einen Vergleich aktueller Fahrzeuginformationen mit aktuellen Karteninformationen eine Qualität der aktuellen Karteninformationen bestimmt wird und zur Ermittlung der momentanen Streckenposition bzw. des vorausliegenden Streckenverlaufs die aktuellen Karteninformationen entsprechend dem ermittelten Grad der Qualität berücksichtigt werden.

### Zusammenfassung der Erfindung

Es ist eine Aufgabe der Erfindung solche Fahrzeugsysteme zu verbessern oder funktionell zu erweitern.

Diese Aufgabe wird durch ein Fahrzeugsystem oder ein Verfahren für dessen Steuerung gemäß einem der unabhängigen Ansprüche 1 und 3 gelöst. Vorteilhafte Weiterentwicklungen sind Gegenstand des abhängigen Anspruchs 2.

Gemäß einem Ausführungsbeispiel wird ein Fahrzeugsystem bereitgestellt, mit einem Positionsmodul zur Bestimmung einer aktuellen Fahrzeugposition basierend auf den Ausgaben eines Satellitensignalsensors sowie zumindest eines Umfeldsensors, Fahrzeugsensors und/oder Verkehrstelematikempfängers; einem ADAS-Horizontprovider, der einen ADAS-Horizont zur Fahrerassistenz bereitstellt; einer Providereinheit in der das Positionsmodul und der ADAS-Horizontprovider vorgesehen sind, wobei die Providereinheit mit einer Navigationseinheit kommunikativ koppelbar ist, und wobei der ADAS-Horizontprovider so ausgelegt ist, dass er den ADAS-Horizont mit einer Rate bereitstellen kann, die höher ist als die der Ausgabe des Satellitensignalsensors. Diese Bereitstellung des ADAS-Horizonts kann somit unabhängig von der Aktualisierungsrate der jeweiligen Sensoren durchgeführt werden (z.B. durch einen Kalmanfilter) und daher können die Aktualisierungen des ADAS-Horizonts mit Aktualisierungsraten bereitgestellt werden, die nicht durch einen Sensor getriggert sind. In der Providereinheit wird eine Fusion von Satelliten- und Fahrzeugsensorsignalen mit Umfeldsensordaten durchgeführt, wodurch die Genauigkeit des ADAS-Horizonts erhöht werden kann. Bei dieser Fusion können beispielsweise Fahrspurinformation einer Umfeldkamera verwendet werden, um eine genauere Zuordnung des Fahrzeugs auf der Straße zu erhalten, wodurch die Genauigkeit, Zuverlässigkeit, Ausfallsicherheit der Bereitstellung des ADAS-Horizonts, Qualität und Aktualität des ADAS-Horizonts verbessert wird.

Die Formulierung "zumindest eines Umfeldsensors, Fahrzeugsensors und/oder Verkehrstelematikempfängers" in dieser Beschreibung bedeutet, dass zumindest ein Element aus der Gruppe bestehend aus Umfeldsensor, Fahrzeugsensor und Verkehrstelematikempfänger vorgesehen ist. Das bevorzugte Element aus dieser Gruppe ist in diesem Rahmen der Umfeldsensor bzw. die Umfeldsensoren.

Gemäß einem anderen Ausführungsbeispiel wird ein Fahrzeugsystem bereitgestellt, welches des Weiteren eine Navigationseinheit aufweist, in der eine digitale Karte hinterlegbar ist. Dies führt zu einer weiteren Genauigkeitssteigerung, da zusätzlich zu den Sensoren eine digitale Karte zur Verfügung steht.

Gemäß einem weiteren Ausführungsbeispiel wird ein Fahrzeugsystem ausgebildet mit einem Dynamikmodul, in dem dynamische Daten und Aktualisierungen bezüglich Einflussgrößen des ADAS-Horizonts erfasst werden. Dies erhöht auch die Genauigkeit der Ausgaben des Fahrzeugsystems und stellt sicher, dass sich täglich ändernde Bedingungen wie Staus, Baustellen, usw. in die ADAS-Horizonterstellung mit einbezogen werden.

Gemäß einem anderen Ausführungsbeispiel wird ein Fahrzeugsystem bereitgestellt, bei dem die Navigationseinheit und die Providereinheit so ausgelegt sind, dass ein die aktuelle Umgebung des Fahrzeugs darstellender Kartenausschnitt aus der digitalen Karte von der Navigationseinheit an die Providereinheit übermittelbar ist. Durch diesen in der Providereinheit vorhandenen Kartenausschnitt steht der Providereinheit auch nach Ausfall der Navigationseinheit ein die Umgebung des Fahrzeugs betreffender Kartenausschnitt zur Verfügung. Da ein Fahrzeug oft auf den selben Strecken bewegt wird, beispielsweise im Rahmen der täglichen Fahrt zur Arbeitsstelle, steht der Providereinheit eventuell genau dieser Kartenabschnitt zur Verfügung. Außerdem ist der Kartenabschnitt im Vergleich zur kompletten Karte rechen- und speichertechnisch einfacher und schneller zu handhaben, so dass die Leistungsfähigkeit der Providereinheit dadurch verbessert wird.

Gemäß einem weiteren Ausführungsbeispiel wird ein Fahrzeugsystem bereitgestellt, bei dem die Navigationseinheit und die Providereinheit so ausgelegt sind, dass in der Navigationseinheit, auf Basis der von dem Positionsmodul bestimmten Fahrzeugposition, ein die aktuelle Umgebung des Fahrzeugs darstellender Kartenausschnitt aus einer digitalen Karte von der Navigationseinheit an die Providereinheit übermittelbar ist. Dadurch dass die Navigationseinheit die Fahrzeugposition von der Providereinheit erhält ist die Positionsbestimmung deutlich genauer, da auch Fahrzeug- und Umfeldsensoren in die Positionsbestimmung einbezogen werden können, die der Navigationseinheit ansonsten nicht zur Verfügung stehen würden.

Gemäß einem anderen Ausführungsbeispiel wird ein Fahrzeugsystem bereitgestellt, bei dem die Providereinheit dem Kartenausschnitt die aktuelle, durch das Positionsmodul bestimmte Fahrzeugposition, zuordnet.

Gemäß einem anderen Ausführungsbeispiel wird ein Fahrzeugsystem bereitgestellt, bei dem die Providereinheit mit einer außerhalb des Fahrzeugs befindlichen Navigationseinheit kommunikativ koppelbar ist. Durch diese Kopplung mit einer außerhalb des Fahrzeugs befindlichen Navigationseinheit können Sensoren und Geräte im Fahrzeug eingespart werden und es kann auf große Datenmengen zurückgegriffen werden, da ein außerhalb des Fahrzeugs befindlicher Server sehr leistungsstark ausgeführt werden kann.

Gemäß einem weiteren Ausführungsbeispiel wird ein Fahrzeugsystem mit einer automatischen Notrufeinheit bereitgestellt, welche in der Providereinheit vorgesehen ist. Somit kann die Zeit bis zum Eintreffen von Hilfe im Falle einer Panne oder eines Unfalls verkürzt werden und überhaupt die Verständigung entsprechender Dienste sichergestellt werden.

Gemäß einem anderen Ausführungsbeispiel wird ein Fahrzeugsystem bereitgestellt, bei dem die Providereinheit so ausgelegt ist, dass sie die durch das Positionsmodul bestimmte, aktuelle Fahrzeugposition für eine Übermittlung zur Navigationseinheit bereitstellt. Dadurch dass die Navigationseinheit die Fahrzeugposition von der Providereinheit erhält ist die Positionsbestimmung deutlich genauer, da auch Fahrzeug- und Umfeldsensoren in die Positionsbestimmung einbezogen werden können, die der Navigationseinheit ansonsten nicht zur Verfügung stehen würden.

Gemäß einem weiteren Ausführungsbeispiel wird ein Fahrzeugsystem bereitgestellt, bei dem die Navigationseinheit eine mobile, nicht fest mit dem Fahrzeug verbundene Navigationseinheit ist. Mobile Navigationsgeräte haben den Vorteil, dass sie auch außerhalb des Fahrzeugs, zum Wandern, in Privatfliegern und -booten eingesetzt werden können. Außerdem können diese Navigationsgeräte bei technischen Neuerungen schnell und unkompliziert ausgetauscht werden. Bei Verwendung solch eines mobilen Navigationsgeräts im Fahrzeug lassen sich diese Vorteile mit den oben beschriebenen Vorteilen der genaueren Positionsbestimmung kombinieren.

Gemäß einem weiteren Ausführungsbeispiel wird ein Fahrzeugsystem bereitgestellt, bei dem die mobile Navigationseinheit zur drahtlosen Kommunikation mit der Providereinheit ausgelegt ist. Dies verhindert ein Ausleihern und einen Verschleiß von Steckverbindungen und ist benutzerfreundlich.

Gemäß einem weiteren Ausführungsbeispiel wird ein Fahrzeugsystem bereitgestellt, bei dem die Navigationseinheit und die Providereinheit so ausgelegt sind, dass Teile des Kartenausschnitts in einer priorisierten Rangfolge übertragbar sind. Somit kann im Falle eines Ausfalls der Navigationseinheit die Wahrscheinlichkeit erhöht werden, dass die wesentlichen Kartenteile bereits übertragen sind, wenn die Navigationseinheit ausfällt, was die Sicherheit des Fahrzeugsystems erhöht.
Vorteilhafterweise hängt dabei die Rangfolge von einem Abstand des Teils des Kartenausschnitts zur aktuellen Fahrzeugposition ab, so dass nähere Teile zuerst übertragbar sind.
Zusätzlich oder alternativ kann vorgesehen sein, dass die Rangfolge von einer Wahrscheinlichkeit eines weiteren Streckenverlaufs abhängt, so dass mit höherer Wahrscheinlichkeit befahrene Teile des Kartenausschnitts zuerst übertragbar sind.

Gemäß einem weiteren Ausführungsbeispiel wird ein Fahrzeugsystem bereitgestellt, bei dem die Navigationseinheit eine zusätzliche Providereinheit aufweist, welche einen eigenen ADAS-Horizontprovider aufweist, der einen ADAS-Horizont zur Fahrerassistenz bereitstellt. Dies hat den Vorteil einer Redundanz der zur Verfügung stehenden Informationen.

Gemäß einem weiteren Ausführungsbeispiel wird ein Fahrzeugsystem bereitgestellt, bei dem die Navigationseinheit zur Kommunikation mit einem fahrzeug- und navigationseinheitenexternen ADAS-Horizontprovider ausgelegt ist, der einen ADAS-Horizont zur Fahrerassistenz bereitstellt. Durch diese Kopplung mit einem außerhalb des Fahrzeugs befindlichen ADAS-Horizontprovider können Sensoren und Geräte im Fahrzeug eingespart werden und es kann auf große Datenmengen zurückgegriffen werden, da ein außerhalb des Fahrzeugs befindlicher Server sehr leistungsstark ausgeführt werden kann.

Gemäß einem weiteren Ausführungsbeispiel wird ein Fahrzeugsystem bereitgestellt, bei dem die digitale Karte über kryptografische Methoden authentifizierbar ist.

Gemäß einem weiteren Ausführungsbeispiel wird ein Fahrzeugsystem bereitgestellt, bei dem die digitale Karte vom Fahrzeugsystem erst nach einer Prüfphase verwendbar ist, während der die digitale Karte für eine bestimmte Zeitspanne durch Vergleich mit Umfeld- und/oder Fahrzeugsensoren authentifizierbar ist. Dadurch wird sichergestellt, dass kein fehlerhaftes oder veraltetes Kartenmaterial verwendet wird.

Gemäß einem weiteren Ausführungsbeispiel wird ein Fahrzeugsystem bereitgestellt, bei dem mehrere Navigationseinheiten mit der Providereinheit koppelbar sind und die Providereinheit zum Vergleich der Ausgaben der Navigationseinheiten ausgelegt ist. Durch diese Redundanz wird die Sicherheit des Fahrzeugsystems erhöht.

Denselben Vorteil bietet ein Ausführungsbeispiel, bei dem eine Navigationseinheit eine fest mit dem Fahrzeug verbundene und eine andere eine mobile Navigationseinheit ist.

Gemäß der Erfindung wird ein Fahrzeug mit einem Fahrzeugsystem bereitgestellt, bei dem das Fahrzeugsystem ein Updatemodul aufweist, über welches Kartenupdates einspielbar und getrennt von der bereits vorhandenen Karte speicherbar sind. Somit stehen mehrere digitale Karten als Vergleichsbasis zum Vergleich mit den Ausgaben der Umfeld- und/oder Fahrzeugsensoren zur Verfügung.

Gemäß der Erfindung ist das Fahrzeugsystem so ausgelegt, dass es die vorhandene Karte und das Kartenupdate mit den Ausgaben von zumindest einem Fahrzeugsensor, Umfeldsensor und/oder Verkehrstelematikempfänger vergleicht und auf Plausibilität prüft und jene Karte benutzt, die besser mit den Ausgaben der Fahrzeug- und/oder Umfeldsensoren übereinstimmt, wobei der Fahrzeugsensor ein Wegstreckensensor, Geschwindigkeitssensor, Lenkradwinkelsensor, Raddrehzahlsensor oder Gierratensensor ist. Dies bietet den Vorteil, dass durch die Verifizierung der Kartenupdates ein aufwendiger Qualitätssicherungsprozess im Vorfeld verkürzt werden kann oder sogar komplett entfallen kann. Dies führt dazu, dass Kartenupdates zeitnaher eingespielt und Verzögerungen durch vorab bedingte Qualitätssicherung drastisch reduziert werden können, ohne die Qualität der Karte und der darauf zurückgreifenden Anwendungen zu senken.

Gemäß einem Ausführungsbeispiel der Erfindung wird ein Fahrzeugsystem bereitgestellt, bei dem das Fahrzeugsystem so ausgelegt ist, dass der vorhandene Kartenausschnitt, mit dem aktualisierten Kartenausschnitt aus dem Updatemodul überschreibbar ist, wenn der aktualisierte Kartenausschnitt eine höhere Übereinstimmung mit den Ausgaben der Fahrzeug- und/oder Umfeldsensoren aufweist. Somit wird sichergestellt, dass die bereits vorhandene Karte nicht vorschnell überschrieben wird und somit nicht mehr verfügbar wäre.

Gemäß einem weiteren Ausführungsbeispiel wird ein Fahrzeugsystem bereitgestellt, bei dem der ADAS-Horizontprovider den ADAS-Horizont basierend auf erfassten Verkehrs- und/oder Ortsschildern und/oder Spurinformationen erstellt. Somit könnte das Fahrzeug oder genauer die Providereinheit den ADAS-Horizont vollkommen autark zur Verfügung stellen.

Gemäß einem weiteren Ausführungsbeispiel wird ein Fahrzeugsystem bereitgestellt, des Weiteren mit einem ADAS-Horizont-Rekonstruktionsmodul, welches zum Empfang von Daten von dem ADAS-Horizontprovider ausgelegt ist, wobei das ADAS-Horizont-Rekonstruktionsmodul eine weitere Schnittstelle aufweist, über welche es Ausgaben zumindest eines Elements der Gruppe bestehend aus einem Umfeldsensor, einem Fahrzeugsensor, einem Verkehrsfunksensor oder einem Telematiksensor empfangen und in die ADAS-Horizont-Rekonstruktion einbeziehen kann. Durch die Verwendung von zusätzlichen Informationen innerhalb des ADAS-Horizont-Rekonstruktionsmodul können dynamische Daten berücksichtigt werden, die durch den ADAS-Horizontprovider, der oft im getrennten Navigationssystem vorgesehen ist, nicht berücksichtigt werden oder nicht berücksichtigt werden können. Da die Daten schon im ADAS-Horizont-Rekonstruktionsmodul eingearbeitet werden, muss keine Änderung mehr an der ADAS-Applikation erfolgen, so dass diese dynamischen Daten allen dem ADAS-Horizont-Rekonstruktionsmodul nachgeschalteten Systemen zur Verfügung stehen.

Gemäß einem weiteren Ausführungsbeispiel wird ein Fahrzeugsystem bereitgestellt mit zumindest einem Umfeldsensor, Fahrzeugsensor und/oder Verkehrstelematikempfänger; und einem ADAS-Horizontprovider, der zumindest zeitweise ausschließlich basierend auf dem Umfeldsensor, Fahrzeugsensor und/oder Verkehrstelematikempfänger einen ADAS-Horizont zur Fahrerassistenz erstellt. Dies ermöglicht, dass das Fahrzeug ohne Navigationssignale von einem Navigationssatelliten einen ADAS-Horizont erstellen kann und somit auch in einer Totzeit, Ausfall oder Nichtvorhandensein eines Navigationsgeräts eigenständig einen ADAS-Horizont erstellen und einem Fahrerassistenzsystem übermitteln kann. Dieses Ausführungsbeispiel lässt sich mit den in dieser Zusammenfassung genannten Ausführungsbeispielen kombinieren, um die an den entsprechenden Stellen genannten Vorteile zu erreichen.

Gemäß einem weiteren Ausführungsbeispiel wird ein Fahrzeugsystem bereitgestellt mit einem Positionsmodul zur Bestimmung einer aktuellen Fahrzeugposition; einem ADAS-Horizontprovider, der einen ADAS-Horizont zur Fahrerassistenz bereitstellt, und einer Providereinheit in der das Positionsmodul und der ADAS-Horizontprovider vorgesehen sind, wobei die Providereinheit mit einer mobilen, nicht fest mit dem Fahrzeug verbundenen Navigationseinheit kommunikativ koppelbar ist. Mobile Navigationsgeräte haben den Vorteil, dass sie auch außerhalb des Fahrzeugs, zum Wandern, in Privatfliegern und -booten eingesetzt werden können. Außerdem können diese Navigationsgeräte bei technischen Neuerungen schnell und unkompliziert ausgetauscht werden. Bei Verwendung solch eines mobilen Navigationsgeräts im Fahrzeug lassen sich diese Vorteile mit den oben beschriebenen Vorteilen der genaueren Positionsbestimmung kombinieren. Dieses Ausführungsbeispiel lässt sich mit den in dieser Zusammenfassung genannten Ausführungsbeispielen kombinieren, um die an den entsprechenden Stellen genannten Vorteile zu erreichen.

Gemäß einem weiteren Ausführungsbeispiel wird ein Fahrzeugsystem bereitgestellt, mit einem Updatemodul, über welches ein Kartenupdate einspielbar ist; einem Versionsspeicher, in dem das Kartenupdate getrennt von einer bereits vorhandenen Karte speicherbar ist; zumindest einem Fahrzeugsensor, Umfeldsensor und/oder Verkehrstelematikempfänger; und einem Kartenupdateprovider, welcher derart ausgelegt ist, dass er das Kartenupdate mit den Ausgaben des Fahrzeugsensors, Umfeldsensors und/oder Verkehrstelematikempfängers vergleicht und auf Plausibilität prüft. Dieses Ausführungsbeispiel bietet den Vorteil, dass durch die Verifizierung der Kartenupdates ein aufwendiger Qualitätssicherungsprozess im Vorfeld verkürzt werden kann oder sogar entfallen kann. Dies führt dazu, dass Kartenupdates zeitnaher eingespielt und Verzögerungen durch vorab bedingte Qualitätssicherung drastisch reduziert werden können, ohne die Qualität der Karte und der darauf zurückgreifenden Anwendungen zu senken. Dieses Ausführungsbeispiel lässt sich mit den in dieser Zusammenfassung genannten Ausführungsbeispielen kombinieren, um die an den entsprechenden Stellen genannten Vorteile zu erreichen.

Gemäß einem weiteren Ausführungsbeispiel wird ein Fahrzeugsystem bereitgestellt mit einem ADAS-Horizontprovider, der einen ADAS-Horizont zur Fahrerassistenz bereitstellt, und einem ADAS-Horizont-Rekonstruktionsmodul, welches zum Empfang von Daten von dem ADAS-Horizontprovider ausgelegt ist, wobei das ADAS-Horizont-Rekonstruktionsmodul eine weitere Schnittstelle aufweist, über welche es Ausgaben zumindest eines Elements der Gruppe bestehend aus einem Umfeldsensor, einem Fahrzeugsensor, einem Verkehrsfunksensor oder einem Telematiksensor empfangen und den ADAS-Horizont basierend auf diesen Ausgaben modifiziert. Durch die Verwendung von zusätzlichen Informationen innerhalb des ADAS-Horizont-Rekonstruktionsmodul können dynamische Daten berücksichtigt werden, die durch den ADAS-Horizontprovider, der oft im getrennten Navigationssystem vorgesehen ist, nicht berücksichtigt werden oder nicht berücksichtigt werden können. Da die Daten schon im ADAS-Horizont-Rekonstruktionsmodul eingearbeitet werden, muss keine Änderung mehr an der ADAS-Applikation erfolgen, so dass diese dynamischen Daten allen dem ADAS-Horizont-Rekonstruktionsmodul nachgeschalteten Systemen zur Verfügung stehen. Dieses Ausführungsbeispiel lässt sich mit den in dieser Zusammenfassung genannten Ausführungsbeispielen kombinieren, um die an den entsprechenden Stellen genannten Vorteile zu erreichen.

Gemäß einem weiteren Ausführungsbeispiel wird ein Fahrzeugsystem bereitgestellt mit einer Providereinheit mit einem ADAS-Horizontprovider, der einen ADAS-Horizont zur Fahrerassistenz bereitstellt; zumindest einem Fahrzeugsensor, Umfeldsensor und/oder Verkehrstelematikempfänger; wobei die Providereinheit mit einer Navigationseinheit zum Empfang eines ADAS-Horizonts kommunikativ koppelbar ist, und wobei der ADAS-Horizontprovider zur Modifikation des von der Providereinheit empfangbaren ADAS-Horizonts basierend auf den Ausgaben des Fahrzeugsensors, Umfeldsensors und/oder Verkehrstelematikempfängers angepasst ist. Dies hat den Vorteil, dass die im Fahrzeug vorgesehene Providereinheit in jedem Falle durch den eigenen ADAS-Horizontprovider einen ADAS-Horizont zur Verfügung stellt. Wird dieses Fahrzeugsystem mit einem (mobilen) Navigationssystem gekoppelt, welches bereits einen eigenen ADAS-Horizont zur Verfügung stellen kann, dann wird durch die Kopplung mit der Providereinheit der ADAS-Horizont der Navigationseinheit durch den nachgeschalteten ADAS-Horizontprovider der Providereinheit durch die Einbeziehung der fahrzeugmontierten Umfeld- und/oder Fahrzeugsensoren und/oder des Verkehrstelematikempfängers aufgebessert.

Gemäß einem weiteren Ausführungsbeispiel wird ein Verfahren zum Steuern eines Fahrzeugsystems bereitgestellt, mit den Schritten: Bestimmen einer aktuellen Fahrzeugposition basierend auf den Ausgaben eines Satellitensignalsensors sowie zumindest einem Fahrzeugsensor, Umfeldsensor und/oder Verkehrstelematikempfänger, und Bereitstellen eines ADAS-Horizonts mittels eines ADAS-Horizontproviders zur Fahrerassistenz, wobei der ADAS-Horizont mit einer Rate bereitgestellt wird, die höher ist als die der Ausgabe des Satellitensignalsensors.

Gemäß einem weiteren Ausführungsbeispiel wird ein Verfahren zum Steuern eines Fahrzeugsystems bereitgestellt, bei dem ein ADAS-Horizont zumindest zeitweise ausschließlich basierend auf zumindest einem Fahrzeugsensor, Umfeldsensor und/oder Verkehrstelematikempfänger erstellt wird.

Gemäß einem weiteren Ausführungsbeispiel wird ein Verfahren zum Steuern eines Fahrzeugsystems bereitgestellt zur Kartenverifikation, mit den Schritten: Einspielen eines Kartenupdates in ein Updatemodul; Speichern des Kartenupdates in einem Versionsspeicher getrennt von einer bereits vorhandenen Karte, und Vergleichen und Plausibilitätsprüfen des Kartenupdates mit den Ausgaben zumindest eines Fahrzeugsensors, Umfeldsensors und/oder Verkehrstelematikempfängers.
Gemäß einem weiteren Ausführungsbeispiel wird ein Verfahren zum Steuern eines Fahrzeugsystems bereitgestellt, mit den Schritten: Bereitstellen eines ADAS-Horizonts zur Fahrerassistenz, und Einspeisen von Ausgaben zumindest eines Elements der Gruppe bestehend aus einem Umfeldsensor, einem Fahrzeugsensor, einem Verkehrsfunksensor oder einem Telematiksensor in ein ADAS-Horizont-Rekonstruktionsmodul, welches zum Empfang von Daten von dem ADAS-Horizontprovider ausgelegt ist, und Modifizieren des ADAS-Horizonts basierend auf der Einspeisung in das ADAS-Horizont-Rekonstruktionsmodul.

Durch die angegebenen Ausführungsbeispiele, welche Verfahren betreffen, lassen sich die im Zusammenhang mit den entsprechenden Vorrichtungen genannten Vorteile auch mit diesen Verfahren erreichen.

Gemäß einem weiteren Ausführungsbeispiel ist ein Programmelement angegeben, das, wenn es auf einem Prozessor eines Fahrzeugsystems ausgeführt wird, den Prozessor anleitet, die oben angegebenen Schritte durchzuführen.

Gemäß einem weiteren Ausführungsbeispiel ist ein computerlesbares Medium angegeben, auf dem ein Programmelement gespeichert ist, das, wenn es auf einem Prozessor ausgeführt wird, den Prozessor anleitet, die oben angegebenen Schritte durchzuführen.

### Kurze Figurenbeschreibung

Fig. 1 zeigt ein Fahrzeug mit dem Fahrzeugsystem;
Fig. 2 zeigt ein erstes Ausführungsbeispiel des Fahrzeugsystems;
Fig. 3 zeigt ein zweites Ausführungsbeispiel des Fahrzeugsystems;
Fig. 4 zeigt ein drittes Ausführungsbeispiel des Fahrzeugsystems gemäß der Erfindung;
Fig. 5 zeigt ein fünftes Ausführungsbeispiel des Fahrzeugsystems, und
Fig. 6 zeigt ein sechstes Ausführungsbeispiel des Fahrzeugsystems.

### Detaillierte Beschreibung der Erfindung

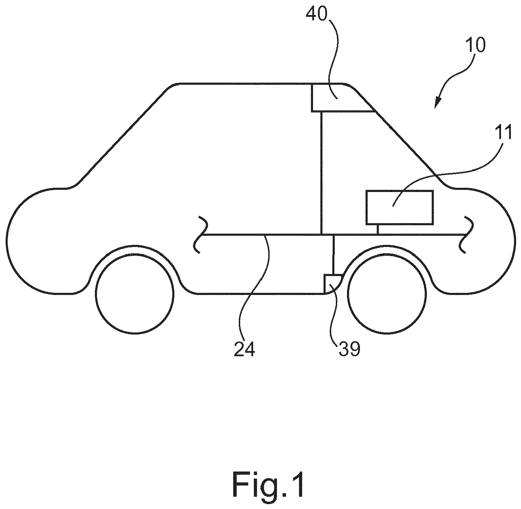

Figur 1 zeigt ein Fahrzeug 10 mit dem Fahrzeugsystem 11 (oder 111, 211).

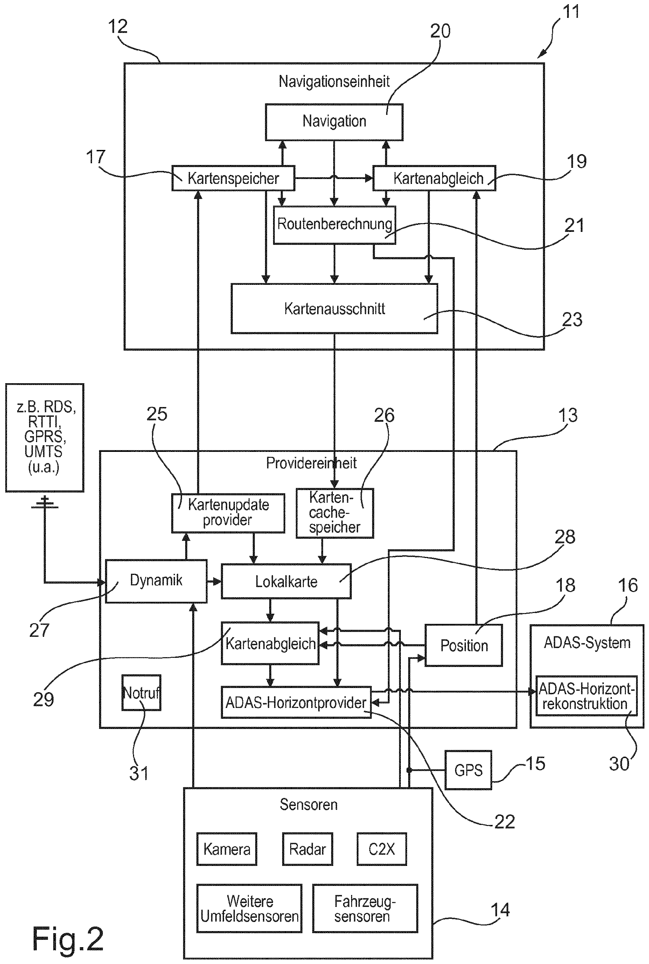

Figur 2 zeigt ein erstes Ausführungsbeispiel des Fahrzeugsystems 11. Das Fahrzeugsystem 11 weist eine Navigationseinheit 12, eine Providereinheit 13, Sensoren 14, einen Satellitensignalsensor 15 und ein Fahrerassistenzsystem 16 (ADAS = "Advanced Driver Assistance System") auf.
In der Navigationseinheit 12 ist ein Kartenspeicher 17 vorgesehen, in dem eine (komplette) digitale Karte oder Straßenkarte hinterlegt ist. In diesem Kartenspeicher 17 werden auch Updates (Aktualisierungen) der digitalen Karte oder von Kartenausschnitten dieser gespeichert. Die Navigationseinheit 12 erhält eine aktuelle Fahrzeugposition von einem Positionsmodul 18 der Providereinheit 13. Alternativ oder zusätzlich kann die Navigationseinheit 12 einen eigenen Satellitensignalsensor aufweisen mit dem beispielsweise Signale der Navigationssatellitensysteme GPS, Galileo, GLONASS, Compass oder IRNSS empfangen werden können. Die vom Positionsmodul 18 ermittelte Position wird an ein Kartenabgleichmodul 19 ("Map Matching Module") der Navigationseinheit 12 übermittelt. Mit Hilfe der Position aus dem Positionsmodul 18 wird hier ein Kartenabgleich ("Map Matching") durchgeführt, bei dem der digitalen Karte, die im Kartenspeicher 17 hinterlegt ist, die aktuelle Fahrzeugposition zugeordnet wird. Um Messungenauigkeiten auszugleichen, kann im Kartenabgleichmodul 19 die gemessene Position mit den Karteninformationen über die Lage und Geometrie von Objekten in der Karte abgeglichen werden, so dass beispielsweise die ermittelte aktuelle Fahrzeugposition dahingehend korrigiert wird, dass diese Position auf und nicht neben einer Straße liegt. Ferner ist in der Navigationseinheit 12 ein Navigationsmodul 20 und ein Routenberechnungsmodul 21 vorgesehen, welche sowohl auf die digitale Karte im Kartenspeicher 17 als auch auf den Kartenabgleich des Kartenabgleichmoduls 19 zugreifen können. Im Navigationsmodul 20 wird eine Routenführung zu einem gewünschten Ziel sowie die Kartendarstellung durchgeführt. Ein Routenberechnungsmodul 21 übernimmt eine Routenerstellung. Die beiden Module 20 und 21 dienen dabei der Navigation für einen Fahrer, entsprechen also den Funktionen, die man typischerweise mit Navigationssystemen verbindet. Das Navigationsmodul 21 übernimmt dabei die Schnittstelle mit dem Fahrer (z.B. Ausgabe wie "in 200m links abbiegen" oder "bitte wenden"). Das Routenberechnungsmodul 21 ermittelt den Weg zum Zielpunkt nach Vorgaben des Fahrers (z.B. schnellster Weg, kürzester Weg, usw.). Diese erstellte Route wird einem ADAS-Horizontprovider 22 der Providereinheit 13 zur Verfügung gestellt. Auf Basis des Kartenabgleichs des Kartenabgleichmoduls 19, der erstellten Route des Routenberechnungsmoduls 21 und der digitalen Karte des Kartenspeichers 17 wird der Providereinheit 13 von einem Kartenausschnittmodul 23 ein Ausschnitt der Karte zur Verfügung gestellt, der die aktuelle Umgebung um das Fahrzeug 10 darstellt. Dieser Kartenausschnitt wird innerhalb der Providereinheit 13 dem ADAS-Horizontprovider 22 zur Verfügung gestellt. Die Navigationseinheit 12 ist ein eigenständiges Gerät welches über eine schnelle Verbindung mit der Providereinheit 13 verbunden ist. Über diese Verbindung kann der Kartenspeicher 17 auch die Updates für die digitale Karte von der Providereinheit 13 erhalten. Durch diese Kopplung mit der Providereinheit 13 und der damit verbundenen Übermittlung von Kartenupdates sowie der aktuellen Fahrzeugposition ist es nicht notwendig, dass die Navigationseinheit 12 an einen Fahrzeugbus 24 (siehe Fig. 1) angeschlossen ist, statt dessen ist die Providereinheit 13 an den Fahrzeugbus 24 angeschlossen, um Daten von Fahrzeugsensoren 39, Umfeldsensoren 40, Verkehrstelematikempfängern usw. zu erhalten, die ebenfalls mit dem Fahrzeugbus 24 verbunden sind.

Die Providereinheit 13 umfasst einen Kartenupdateprovider 25 einen Kartencachespeicher 26, ein Dynamikmodul 27, einen Lokalkartenspeicher 28, ein Kartenabgleichmodul 29 und wie bereits erwähnt das Positionsmodul 18 sowie den ADAS-Horizontprovider 22. In dem Dynamikmodul 27 werden sämtliche dynamische Daten und Aktualisierungen für die digitale Karte und/oder den ADAS-Horizont erfasst, wie z.B. Staudaten, neue Straßenführungen, Daten aus Telematikdiensten (z.B. C2X = "Car-to-X-Communication", aber auch RDS/TMC, usw.), insbesondere Verkehrstelematikdiensten. Diese Daten empfängt das Dynamikmodul 27 über Übertragungssysteme wie beispielsweise dem Radiodatensystem (RDS), dem Echtzeit-Verkehrsinformationssystem (RTTI), dem allgemeinen paketorientierten Funkdienst (GPRS) oder UMTS ("Universal Mobile Telecommunications System"), DSRC ("Dedicated Short Range Communication") nach IEEE802.11p, usw. Diese dynamischen Daten werden direkt dem Kartenupdateprovider 25 und dem Lokalkartenmodul 28 zur Verfügung gestellt und stehen somit auch den anderen Einheiten zur Verfügung. Der Kartenupdateprovider 25 prüft die dynamischen Daten auf Authenzität und ändert die entsprechenden, in dem Kartenspeicher 17 oder dem Lokalkartenmodul 28 gespeicherten Kartenausschnitte oder überschreibt die entsprechenden bisherigen Kartenausschnitte mit den neu eingespeisten Kartenausschnitten. Außerdem können Updates für die digitale Karte hier zwischengespeichert werden, unabhängig davon ob die Navigationseinheit 12 Updates vorsieht oder nicht. Der Kartencachespeicher 26 erhält vom Kartenausschnittmodul 23 einen Kartenausschnitt, der an das Lokalkartenmodul 28 weitergegeben wird, wo dieser Kartenausschnitt eventuell entsprechend der dynamischen Daten angepasst wird. Das Lokalkartenmodul 28 gibt die digitale Karte, welche das Umfeld des Fahrzeugs 10 betrifft, an den ADAS-Horizontprovider 22 weiter. Außerdem wird über das zwischen Lokalkartenmodul 28 und ADAS-Horizontprovider 22 vorgesehene Kartenabgleichmodul 29 ein Abgleich dieses Kartenausschnitts vorgenommen. Das Kartenabgleichmodul 29 gleicht die lokale Karte auf Basis von Daten der Sensoren 14 und dem Positionsmodul 18 an. Der Kartenabgleich des Kartenabgleichmoduls 29 erfolgt getrennt von dem Kartenabgleich in der Navigationseinheit 12 und beschränkt sich auf den übergebenen Kartenausschnitt. Außerdem werden hier auch die dynamischen Informationen berücksichtigt.

Das Positionsmodul 18 ermittelt anhand der Sensoren 14 und dem Satellitensignalsensor 15 die aktuelle Fahrzeugposition und gibt diese an die Kartenabgleichmodule 19 und 29 weiter. Der Satellitensignalsensor 15 kann in der Providereinheit 13 integriert sein oder separat angeordnet und zum Datenaustausch mit der Providereinheit 13 verbunden sein. Mit dem Satellitensignalsensor 15 können beispielsweise Signale der Navigationssatellitensysteme GPS, Galileo, GLONASS, Compass oder IRNSS empfangen werden. Die Sensoren 14 umfassen Fahrzeugsensoren, Umfeldsensoren oder Verkehrstelematikempfänger zum Empfangen von Verkehrstelematikdiensten (C2X), die vorzugsweise über Fahrzeug-zu-Fahrzeug-Kommunikation oder Fahrzeug-zu-Infrastruktur-Kommunikation Positions- und Umfeldinformationen liefern. Der in dieser Beschreibung verwendete Begriff Fahrzeugsensor umfasst Sensoren wie beispielsweise Wegstreckensensoren, Geschwindigkeitssensoren, Lenkradwinkelsensoren, Raddrehzahlsensoren 39, Gierratensensoren, usw., d.h. bei den Fahrzeugsensoren handelt es sich um Sensoren, die einen Zustand des Fahrzeugs oder von Fahrzeugteilen erfassen, insbesondere erfassen die Fahrzeugsensoren einen Bewegungszustand des Fahrzeugs. Bei den Umfeldsensoren handelt es sich um Sensoren, wie beispielsweise Kameras 40, einem Radar, Lidarsensoren oder Ultraschallsensoren, usw., d.h. Umfeldsensoren sind Sensoren, die das Umfeld des Fahrzeugs erfassen, wobei die Umfeldsensoren am Fahrzeug montiert sind und autark, d.h. ohne Informationssignale von außen, Objekte im Umfeld des Fahrzeugs erfassen. Die hier erwähnten Verkehrstelematikempfänger kommunizieren vorzugsweise über ein Automotive WLAN nach der Norm IEEE 802.11p, wobei eine Kommunikation über Fahrzeug-zu-Fahrzeugkommunikation, Fahrzeug-zu-Infrastruktur-Kommunikation, RDS, TMC, RTTI, GPRS, UMTS oder DSRC stattfindet. Diese Kommunikation betrifft Positionsinformationen, das Fahrzeug betreffende Umfeldinformationen (z.B. Objektinformationen, Fahrspur- oder Streckenführungsinformationen, Verkehrsflussinformationen), Streckenführungsinformationen oder Verkehrsflussinformationen (die beiden letztgenannten auch außerhalb des Fahrzeugumfelds). Beispielsweise können so die von einem vorausfahrenden Fahrzeug per Umfeldsensor erfassten Informationen an nachfolgende Fahrzeuge per Fahrzeug-zu-Fahrzeug- Kommunikation übermittelt werden. Allgemein liefern die Sensoren 14 zusätzlich zu den Positionsinformationen auch noch Informationen (z.B. Objektinformationen oder Streckenführungsinformationen wie Spurinformationen), die zum Zwecke des Kartenabgleichs verwendet werden können, daher sind die Sensoren 14 auch noch direkt mit dem Kartenabgleichmodul 29 gekoppelt. Der Kartenabgleich ist jedoch der Positionsbestimmung seitens des Positionsmoduls 18 nachgeschaltet.

Der ADAS-Horizontprovider 22 bekommt über das Lokalkartenmodul 28 und über das Kartenabgleichmodul 29 einen Kartenausschnitt von der Navigationseinheit 12 oder genauer vom Kartenausschnittmodul 23. Dieser Kartenausschnitt deckt die aktuelle Umgebung des Fahrzeugs 10 für einen bestimmten Zeitraum ab, beispielsweise von T Sekunden oder länger. Darüber hinaus wird die aktuell gewählte Route vom Routenberechnungsmodul 21 an den ADAS-Horizontprovider 22 übermittelt. Auf Basis dieses Kartenausschnitts, der aktuellen Route und der Position aus dem Positionsmodul 18 (über das Kartenabgleichmodul 29) wird ein ADAS-Horizont erstellt. Der ADAS-Horizont ist ein Erwartungshorizont für den weiteren Straßen- und Verkehrsverlauf, auf dessen Basis ein Fahrerassistenzsystem einen Fahrzeugführer beim Fahren unterstützt. Die Providereinheit 12 oder genauer der ADAS-Horizontprovider 22 kann Aktualisierungen des ADAS-Horizonts mit einer höheren Rate als der Ausgaberate des Satellitensignalsensors 15 (GPS-Rate) bereitstellen, weil im Positionsmodul 18 eine modellbasierte bzw. modellgestützte Positionsbestimmung verwendet wird, welche die Ausgaben mehrerer der verschiedenen Sensoren 14 und 15 verwendet, um daraus die aktuelle Fahrzeugposition zu berechnen. Diese Berechnung kann unabhängig von der Aktualisierungsrate der jeweiligen Sensoren durchgeführt werden (z.B. durch einen Kalmanfilter) und daher können die Aktualisierungen des ADAS-Horizonts mit Aktualisierungsraten bereitgestellt werden, die nicht durch einen Sensor 14, 15 getriggert sind. Indem in der Providereinheit 13 eine Fusion von Satelliten- und Fahrzeugsensorsignalen mit Umfeldsensordaten sowie Verkehrstelematikinformationen durchgeführt wird, kann die Genauigkeit des ADAS-Horizonts erhöht werden. Bei dieser Fusion können beispielsweise Fahrspurinformation einer Umfeldkamera verwendet werden, um eine genauere Zuordnung des Fahrzeugs auf der Straße zu erhalten, wodurch die Genauigkeit, Zuverlässigkeit, Ausfallsicherheit der Bereitstellung des ADAS-Horizonts, Qualität und Aktualität des ADAS-Horizonts verbessert wird.

Ferner kann beim Kartenabgleich im Kartenabgleichmodul 29 beispielsweise durch eine Umfeldkamera festgestellt werden, dass nur zwei Fahrspuren zur Verfügung stehen (z.B. Aufgrund eines Unfalls), obwohl laut Kartenmaterial drei Fahrspuren vorhanden sein sollten. Diese Information kann direkt als Eingangsparameter für die Erzeugung des ADAS-Horizonts verwendet werden. Zusätzlich kann per Schildererkennung die Art eines Verkehrszeichen oder sogar die Ortsbezeichnung von Wegweisern/Ortsschildern eingelesen werden und so in dem Kartenabgleichmodul 29 ein Abgleich der in der Karte vorhandenen Schilder mit der Realität erfolgen. Es können auch Informationen eines Radars verwendet werden, um den Verlauf der Fahrspur zu schätzen und diese Information mit der Karteninformation abzugleichen. Mit diesem Vorgehen wird sichergestellt, dass der ADAS-Horizont jeweils die aktuell gültige Straßensituation abbildet, und nicht die Straßensituation zum Zeitpunkt der Aufnahme der Kartendaten.

Der vom ADAS-Horizontprovider 22 bereitgestellte ADAS-Horizont wird an das Fahrerassistenzsystem 16 übermittelt, in dem ein ADAS-Horizont-Rekonstruktionsmodul 30 vorgesehen ist, das den ADAS-Horizont aus dem vorzugsweise komprimiert an das Fahrerassistenzsystem 16 übermittelten ADAS-Horizont rekonstruiert wird. Das ADAS-Horizont-Rekonstruktionsmodul 30 dient dabei als Bindeglied zwischen dem ADAS-Horizontprovider 22 und ADAS-Applikationen. Die beschriebene Providereinheit 13 umfasst somit Kommunikationseinheiten (siehe Dynamikmodul 27) mit der Außenwelt (Wifi, GSM/UMTS/..., C2X, ...) bzw. Schnittstellen zu einer oder mehreren Kommunikationseinheiten, Satellitensignalsensor 15 bzw. Schnittstellen zu diesem, Anbindung an den Fahrzeugbus 24, Positionsmodul 18 sowie ADAS-Horizontprovider 22, idealerweise in einem Gerät. Ferner ist in der Providereinheit 13 auch ein Ecall-Modul 31 vorgesehen, welches im Notfall automatisch Rettungsdienste verständigt. Da für einen automatisierten Notruf (Ecall) eine Positionsbestimmung notwendig ist, ist es von Vorteil, wenn das Positionsmodul 18 und das Ecall-Modul 31 im selben Gerät vorgesehen sind.

Die Aufteilung dieses Ausführungsbeispiels in Navigationseinheit 12 und Providereinheit 13 mit den oben beschriebenen Funktionalitäten stellt sicher, dass das Fahrerassistenzsystem 16 (oder andere Fahrzeugsysteme oder ADAS-Applikationen) einen ADAS-Horizont erhalten, selbst wenn die Navigationseinheit 12 (oder eine Infotainmenteinheit mit integrierter Navigationseinheit) kurzzeitig nicht verfügbar ist oder ausfällt. Durch die beschriebene Aufteilung kann die Navigationseinheit 12 nach geringeren Sicherheitsstandards entwickelt werden und damit auch schneller mit neuen Funktionen ausgestattet werden, was im Bereich Infotainment wichtig ist. Diese Gewichtung hin zu Funktionalität wird als "Feature Driven" bezeichnet. Im Gegensatz dazu wird die Providereinheit 13 so entwickelt, dass sie höhere Sicherheitsstandards erfüllt, was für Fahrerassistenzsysteme notwendig ist, wobei diese Gewichtung als "Safety Driven" bezeichnet wird. Durch die Aufteilung wird demnach die Ausfallwahrscheinlichkeit des ADAS-Horizonts im Vergleich zu einer Lösung rein auf Basis einer Navigationseinheit gesenkt, da die Providereinheit 12 nach höheren Sicherheitsstandards entwickelt werden kann. Ein weiterer Vorteil dieser Aufteilung ist, dass dadurch die Datenrate konstanter gehalten werden kann, da die Providereinheit 13 nach höheren Sicherheitsstandards entwickelt wird und kein Benutzerinterface aufweist, wodurch eine Störquelle für die Berechnung (Reaktion auf Benutzereingaben) wegfällt. Durch die Verlagerung der Sensorfusion in die Providereinheit 13 als einen zentralen Ort wird sichergestellt, dass alle Fahrzeugsysteme den gleichen ADAS-Horizont erhalten und dieser der jeweils Bestmögliche ist.

In dem soeben beschriebenen Ausführungsbeispiel sind die Navigationeinheit 12, die Providereinheit 13, die Sensoren 14, der Satellitensignalsensor 15 und das Fahrerassistenzsystem 16 in das Fahrzeug 10 integriert. Es ist jedoch auch möglich, dass die Navigationseinheit 12 außerhalb des Fahrzeugs 10 angeordnet ist und die Providereinheit 13 mit der Navigationseinheit 12 drahtlos kommuniziert, die Navigationseinheit 12 ist dann beispielsweise auf einen Server außerhalb des Fahrzeugs verlagert. Auf diese Weise ist es auch möglich, den ADAS-Horizont nur auf Basis von Offboard-Navigation zu erstellen.

Gemäß einer Abwandlung dieses ersten Ausführungsbeispiels kann eine zusätzliche Fusionseinheit bereitgestellt werden, die außerhalb der Providereinheit 13 vorgesehen ist und eine umfangreiche Sensorfusion durchführt, die mit den Kartendaten gestützt werden kann. Gemäß dieser Abwandlung kann auch der ADAS-Horizontprovider in die Fusionseinheit ausgelagert werden. Die übrigen in der Providereinheit 13 vorgesehenen Module verbleiben in dieser Abwandlung auch weiterhin in der Providereinheit 13.

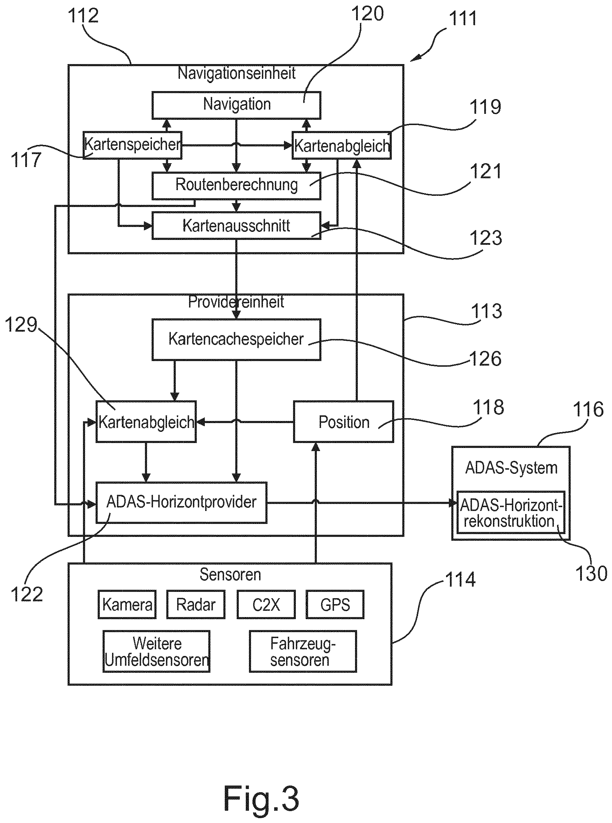

Figur 3 zeigt ein zweites Ausführungsbeispiel des Fahrzeugsystems 111. Sollen in einem bisherigen Fahrerassistenzsystem digitale Karten bzw. Kartendaten verwendet werden, so setzt dies ein in das Fahrzeug integriertes (Navigations-)Modul voraus. Viele Fahrer benutzen jedoch ein mobiles Navigationsgerät, da diese Geräte preiswerter sind, leicht ausgetauscht werden können und damit auch während der Lebenszeit des Fahrzeugs verbessert werden können. Hier setzt dieses Ausführungsbeispiel an. In dem ersten Ausführungsbeispiel wurde bereits eine Architektur vorgeschlagen, die mit Hilfe eines zwischengespeicherten Kartenausschnitts und/oder Sensoren sicherstellt, dass Fahrerassistenzsysteme auch dann noch Karteninformationen bekommen, wenn die Navigationseinheit ausfällt oder kurzzeitig nicht reagiert. Dieses Ausführungsbeispiel erweitert diese Grundidee nun auf die Anbindung mobiler Geräte.

Das Fahrzeugsystem 111 weist eine mobile Navigationseinheit 112, eine Providereinheit 113, Sensoren 114 und ein Fahrerassistenzsystem 116 ("ADAS" = Advanced Driver Assistance System) auf.

In der Navigationseinheit 112 ist ein Kartenspeicher 117 vorgesehen, in dem eine digitale Karte oder Straßenkarte hinterlegt ist. Die Navigationseinheit 112 erhält eine aktuelle Fahrzeugposition von einem Positionsmodul 118 der Providereinheit 113. Zusätzlich kann die Navigationseinheit 112 einen eigenen Satellitensignalsensor, mit dem beispielsweise Signale der Navigationssatellitensysteme GPS, Galileo, GLONASS, Compass oder IRNSS empfangen werden können, aufweisen. Die vom Positionsmodul 118 ermittelte Position wird an ein Kartenabgleichmodul 119 der Navigationseinheit 112 übermittelt, welches ebenso wie das Kartenabgleichmodul 19 einen Kartenabgleich durchführt. Ferner ist in der Navigationseinheit 112 ein Navigationsmodul 120 und ein Routenberechnungsmodul 121 vorgesehen, für die die Beschreibung der entsprechenden Module 12, 20 und 21 des ersten Ausführungsbeispiels zutrifft. Die erstellte Route des Routenberechnungsmoduls 121 wird einem ADAS-Horizontprovider 122 der Providereinheit 112 zur Verfügung gestellt. Der Providereinheit 113 wird von einem Kartenausschnittmodul 123 ein Ausschnitt der Karte zur Verfügung gestellt, der die aktuelle Umgebung um das Fahrzeug darstellt. Dieser Kartenausschnitt wird innerhalb der Providereinheit 113 dem ADAS-Horizontprovider 122 zur Verfügung gestellt. Die Navigationseinheit 112 ist ein eigenständiges, mobiles Gerät (oder ein anderes mobiles Gerät mit digitalen Karten bzw. Navigationsfunktion) und mittels einer drahtlosen (z.B. Bluetooth, WLAN) oder drahtgebundenen (z.B. USB) Kommunikationstechnik mit der Providereinheit 113 (bzw. dem Fahrzeug) verbunden. An Stelle eines mobilen Navigationsgeräts kann für die mobile Navigationseinheit 112 auch ein Smartphone mit entsprechender Navigationsfunktion bzw. Navigationssoftware oder ähnliche Systeme verwendet werden.

Die Providereinheit 113 umfasst einen Kartencachespeicher 126, ein Kartenabgleichmodul 129 und wie bereits erwähnt das Positionsmodul 118 und den ADAS-Horizontprovider 122. Die Providereinheit 113 ist an den Fahrzeugbus 24 angeschlossen, um Daten von den Sensoren 114, wie beispielsweise Fahrzeugsensoren 39, Umfeldsensoren 40, Verkehrstelematikempfängern usw., zu erhalten. Die Providereinheit 113 befindet sich vorzugsweise im Fahrzeug 10 und ist nicht Teil des mobilen Navigationsgeräts. Der Kartencachespeicher 126 erhält vom Kartenausschnittmodul 123 einen Kartenausschnitt. Der Kartencachespeicher 126 gibt die digitale Karte, welche das Umfeld des Fahrzeugs betrifft, an den ADAS-Horizontprovider 122 weiter. Außerdem wird über das zwischen Kartenabgleichmodul 129 und ADAS-Horizontprovider 122 vorgesehene Kartenabgleichmodul 129 ein Abgleich dieses Kartenausschnitts vorgenommen. Das Kartenabgleichmodul 129 gleicht die lokale Karte auf Basis von Daten der Sensoren 114 und dem Positionsmodul 118 an. Der Kartenabgleich des Kartenabgleichmoduls 129 erfolgt getrennt von dem Kartenabgleich in der Navigationseinheit 112 und beschränkt sich auf den übergebenen Kartenausschnitt. Die Übermittlung des Kartenausschnitts vom Kartenausschnittmodul 123 zur Providereinheit 113 oder genauer zum Kartencachespeicher 126 kann so gestaltet werden, dass zuerst Informationen in der nahen Umgebung des Fahrzeugs 10 übertragen werden und erst anschließend die weiter entfernten. Ebenso werden zuerst die wahrscheinlich befahrenen Teile der Karte übertragen (z.B. Hauptstraßen) und anschließend die unwahrscheinlicheren Teile, usw. Der Kartenausschnitt wird so gewählt, dass er die aktuelle Umgebung des Fahrzeugs 10 für einen Zeitraum von T Sekunden oder länger abdeckt. Damit wird sichergestellt, dass selbst bei einem Ausfall der Verbindung oder einem Ausfall der Navigationseinheit 112 noch lange genug Kartendaten zur Verfügung stehen, um gegebenenfalls eine Warnung an den Fahrer zu senden und in einer Übergangszeit die Funktionalität der Providereinheit 113 und des Fahrerassistenzsystem 116 so anzupassen, dass keine Karte mehr benötigt wird.

Das Positionsmodul 118 ermittelt anhand der Sensoren 114 die aktuelle Fahrzeugposition und gibt diese an die Kartenabgleichmodule 119 und 129 weiter. Die Sensoren 114 umfassen Fahrzeugsensoren (wie beispielsweise Wegstreckensensoren, Geschwindigkeitssensoren, Lenkradwinkelsensoren, Raddrehzahlsensoren, Gierratensensoren, usw.), Umfeldsensoren (wie beispielsweise Kameras, einem Radar, usw.) oder Verkehrstelematikempfänger (C2X). Ferner umfassen die Sensoren 114 einen Satellitensignalsensor, mit dem beispielsweise Signale der Navigationssatellitensysteme GPS, Galileo, GLONASS, Compass oder IRNSS empfangen werden können. Alternativ kann der Satellitensignalsensor auch in der Providereinheit 113 integriert sein. Zusätzlich zu den Positionsinformationen liefern die Sensoren 114 auch noch Informationen (z.B. Objektinformationen), die zum Zwecke des Kartenabgleichs verwendet werden können, daher sind die Sensoren 114 auch noch direkt mit dem Kartenabgleichmodul 129 gekoppelt.

Der ADAS-Horizontprovider 122 bekommt über den Kartencachespeicher 126 und über das Kartenabgleichmodul 129 ein Kartenausschnitt von der Navigationseinheit 112 oder genauer vom Kartenausschnittmodul 123. Aus diesen Informationen wird wie im ersten Ausführungsbeispiel beschrieben ein ADAS-Horizont erstellt, der dem Fahrerassistenzsystem 116 zur Verfügung gestellt wird. In anderen Worten ausgedrückt wird in der Providereinheit 113 auf Basis des Kartenausschnitts, der Position aus dem Positionsmodul 118 und gegebenenfalls der Route aus dem Routenberechnungsmodul 121 ein Kartenabgleich erstellt und darauf aufbauend ein ADAS-Horiziont generiert.

Diese Aufteilung bietet die bereits im Zusammenhang mit dem ersten Ausführungsbeispiel beschriebenen Vorteile, die an dieser Stelle nicht wiederholt werden.

Durch die oben beschriebene Verbindung der mobilen Navigationseinheit 112 bzw. des mobilen Navigationsgeräts mit der Providereinheit 113 werden auch die durch das Positionsmodul 118 ermittelten Positionssignale von der Providereinheit 113 (d.h. vom Fahrzeug) an die mobile Navigationeinheit 112 übermittelt. Mit diesen Positionssignalen kann das mobile Navigationsgerät bereits eine bessere Navigation bereitstellen, als das ohne die Anbindung an die Providereinheit 113 (bzw. das Fahrzeug 10) möglich wäre, da im Positionsmodul 118 nicht wie bei Navigationsgeräten üblich nur Satellitensignale verwendet werden, sondern zusätzlich auch noch die weiteren oben erwähnten Fahrzeug- und Umfeldsensoren bei der Positionsermittlung zu Grunde gelegt werden. Verfügt das mobile Navigationsgerät 112 über zusätzliche Positionsinformationsquellen, die nicht im Fahrzeug 10 verfügbar sind (z.B. über Kommunikationsverbindungen), so kann die ermittelte Position mit diesen Informationen, beispielsweise beim Kartenabgleich im Kartenabgleichmodul 119, verbessert werden.

Sämtliche Blöcke bzw. Module der Providereinheit 113 müssen physikalisch nicht im gleichen Steuergerät realisiert werden. Ebenso können die Sensoren 114 getrennt voneinander realisiert sein. Es ist auch möglich, dass sich eine zusätzliche Providereinheit im mobilen Navigationsgerät 112 befindet und zusätzlich einen ADAS-Horizont an das Fahrzeug 10 übermittelt (siehe sechstes Ausführungsbeispiel). Dadurch ergibt sich eine weitere Redundanz für die Berechnung des ADAS-Horizonts und Fehler bei der Übertragung (z.B. des Kartenausschnitts oder des ADAS-Horizonts) können durch einen nicht zum Kartenausschnitt passendenden ADAS Horizont erkannt werden.

Ist im Fahrzeug 10 zusätzlich zur oben beschriebenen Navigationseinheit 112 bereits ein eingebautes Navigationsgerät vorhanden, so ist denkbar, dass die Informationen des eingebauten Navigationsgeräts durch Daten aus der mobilen Navigationseinheit 112 angereichert werden, falls diese Informationen nicht im eingebauten Gerät zur Verfügung stehen. Zusätzlich kann dadurch ein Vergleich der Kartenausschnitte von eingebautem Navigationsgerät und mobiler Navigationseinheit 112 erstellt werden und Fehler im Kartenmaterial aufgedeckt werden. Diese Redundanz der Information führt zu einer erhöhten Sicherheit verglichen mit nur einer Kartenquelle.

Weiterhin ist denkbar, dass das mobile Navigationsgerät 112 den ADAS-Horizont nicht selbst berechnet, sondern die Position an einen Server sendet und dieser den ADAS-Horizont errechnet, welcher anschließend an das mobile Navigationsgerät 112 übermittelt wird und von diesem an das Fahrzeug 10 weitergeleitet wird.

Um sicherzustellen, dass die Kartendaten sicher und vertrauenswürdig sind, werden diese über kryptografische Methoden authentifiziert. Hierzu kann z.B. ein Fahrzeughersteller einen Schlüssel vergeben, mit dem die Daten verschlüsselt und/oder zertifiziert werden müssen, damit sie vom Fahrzeug 10 bzw. der Providereinheit 113 angenommen werden. Sind die Kartendaten nicht authentifiziert, so können die Daten unter Umständen trotzdem verwendet werden, falls sie eine vorher definierte Zeit lang durch die (Umfeld-) Sensordaten bestätigt wurden. Damit wird sichergestellt, dass die mobilen Navigationsgeräte einen gewissen Qualitätsstandard einhalten, da sie ansonsten keinen Schlüssel durch den Fahrzeughersteller erhalten.

Werden zwei oder mehr verschiedene mobile Navigationsgeräte angeschlossen (z.B. ein PNA ("Portable Navigation Assistant" / mobiles Navigationssystem) und ein Mobiltelefon mit Navigationsfunktion, so können die Informationen bzw. Positions- und Navigationsausgaben dieser Geräte verglichen werden. Somit kann zusätzlich die Verlässlichkeit der Informationen bewertet und die Verfügbarkeit erhöht werden.

Gemäß einer Abwandlung des zweiten Ausführungsbeispiels handelt es sich bei der Navigationseinheit 112 um einen Server, der außerhalb des Fahrzeugs 10 angeordnet ist und die Funktion der oben beschriebenen Navigationseinheit 112 übernimmt. Dies stellt eine sogenannte Offboard-Navigation dar, bei der die Daten per Luftschnittstelle von dem Server bezogen werden. Solch eine Offboard-Navigation kann an Stelle eines mobilen Navigationsgeräts verwendet werden oder es können beide Systemarten im Mix oder parallel verwendet werden.

Das zweite Ausführungsbeispiel kann mit dem im ersten Ausführungsbeispiel vorgestellten Methoden für die Verwendung dynamischer Daten und Kartenaktualisierungen kombiniert werden.

Durch dieses zweite Ausführungsbeispiel wird es möglich, mobile Navigationsgeräte oder andere mobile Gerät mit digitalen Karten und/oder Navigationsfähigkeiten als Grundlage für einen ADAS-Horizont für Fahrerassistenzsysteme zu verwenden. Über die kryptografische Absicherung der Kartendaten wird sichergestellt, dass ein gewisses Qualitätsniveau der Kartendaten eingehalten wird und nur geprüfte Kartendaten verwendet werden können.

Im Folgenden wird ein Ausführungsbeispiel gemäß der Erfindung beschrieben, welches eine Weiterentwicklung der vorhergehenden Ausführungsbeispiele, insbesondere des ersten Ausführungsbeispiels ist.

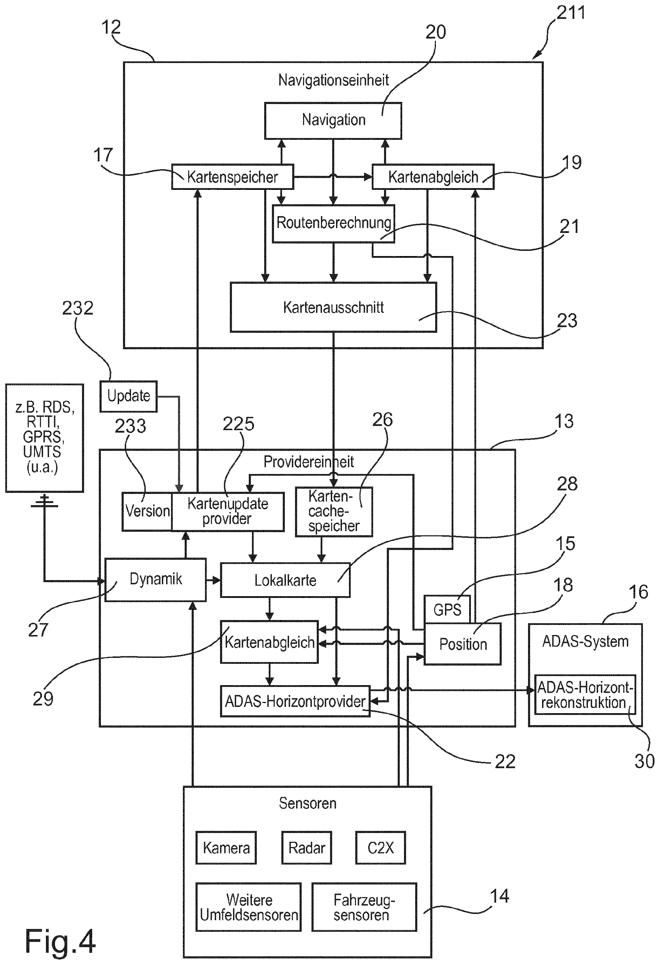

Figur 4 zeigt ein drittes Ausführungsbeispiel des Fahrzeugsystems gemäß der Erfindung. Bezüglich Figur 4 werden nur die Elemente beschrieben, die über das in Figur 2 dargestellte hinausgehen. Im Übrigen trifft hier die Beschreibung von Figur 2 zu.
Wird gemäß diesem Ausführungsbeispiel ein Update über ein Updatemodul 232 für eine digitale Karte in einem Kartenupdateprovider 225 eingespeist, so wird dieses Update parallel zur bereits bestehenden Karte in einer Versionsverwaltung 233 des Kartenupdateproviders 225 gespeichert, so dass neben der bereits vorhandenen Karte im Kartenspeicher 17 oder im Kartencachespeicher 26 ein oder mehrere Updateversionen im Versionsspeicher 233 zugänglich sind. Wird das Fahrzeug 10 nun in einem Bereich bewegt, die ein oder mehrere der im Versionsspeicher 233 gespeicherten Updates betreffen, so wird eines oder alle für diesem Bereich relevanten Updates mit den Ausgaben der Sensoren 14, vorzugsweise der Umfeldsensoren, verglichen und geprüft, ob die Attribute stimmen, d.h. ob die Ausgaben der Sensoren 14 mit den Updates übereinstimmen. So können beispielsweise per Videosensorik die Verkehrsschilder überprüft werden. Der Verlauf der Straße kann per Kartenabgleichsfunktion, die im Kartenupdateprovider 225 implementiert ist, überprüft werden. Bei diesem Kartenabgleich kann neben den Sensoren 14 auch die vom Positionsmodul 18 bestimmte aktuelle Fahrzeugposition verwendet werden. Zusätzlich zu den Updates wird auch die bereits vorhandene Karte im Kartencachespeicher 26 ebenso wie das Update auf Plausibilität überprüft. Ergibt der Kartenabgleich, dass die aktuelle Verkehrssituation bzw. der aktuelle Straßenverlauf eher mit einer Straße der bisherigen Karte übereinstimmt, dann wird diese verwendet. Das heißt aus den mehreren zur Verfügung stehenden Kartenausschnitten aus dem Kartencachespeicher 26 und den entsprechenden Updates wird jener Kartenausschnitt als neuer Kartenausschnitt ausgewählt, der am besten mit den Ausgaben der Sensoren 14 und/oder mit den Ausgaben der Sensoren 14 und des Positionsmoduls 18 übereinstimmt. Nach dieser Überprüfung wird jeweils die Karte verwendet, die besser zur Realität passt. Diese Karte wird zusätzlich als "aktuell" gekennzeichnet und damit als Standard verwendet. Die anderen Versionen des Kartenausschnitts werden jedoch erst dann verworfen, wenn eine größere Anzahl an Bestätigungen für die "aktuelle" Version des Kartenausschnitts erfolgt ist.

Wird eine Navigation durch ein Gebiet gewünscht, in dem noch keine Bestätigung des Kartenupdates erfolgt ist, so kann entweder durch eine Benutzeroption eingestellt werden, welche Karte verwendet wird, d.h. ob immer die neueste Version oder immer eine verifizierte Version verwendet werden soll, oder ob alle Versionen verwendet werden sollen und eine Strecke gewählt wird, die in allen Fällen zum Ziel führt.

Diejenigen Kartenupdates, welche den oben beschriebenen Qualitätssicherungsprozess durchlaufen haben, werden als solche markiert und mit einem Status- und/oder Zeitstempel versehen, der anzeigt, wann die Kartendaten verifiziert wurden. Gemäß diesem Ausführungsbeispiel kann vorgesehen sein, dass diese Kartenupdates sofort als aktuell verwendet werden und alle älteren Versionen, d.h. älter als der Zeitstempel, verworfen werden.

Dieses Ausführungsbeispiel bietet den Vorteil, dass durch die Verifizierung der Kartenupdates ein aufwendiger Qualitätssicherungsprozess im Vorfeld verkürzt werden kann oder entfallen kann. Dies führt dazu, dass Kartenupdates zeitnaher eingespielt und Verzögerungen durch vorab bedingte Qualitätssicherung drastisch reduziert werden können, ohne die Qualität der Karte und der darauf zurückgreifenden Anwendungen zu senken.

Im Folgenden wird ein viertes Ausführungsbeispiel beschrieben, welches mit den vorhergehend beschriebenen Ausführungsbeispielen ganz oder teilweise kombinierbar ist.

Im Zusammenhang mit dem ersten Ausführungsbeispiel wurde bereits ausführlich die Fusion von Sensordaten, insbesondere die Fusion von Navigationssatellitensignalen mit Fahrzeug- und/oder Umfeldsensoren sowie Verkehrstelematikempfängern beschrieben, wodurch sich eine höhere Qualität und Genauigkeit der Positionsbestimmung sowie eine Überbrückung einer Totzeit eines Navigationsgeräts oder eines Navigationssatellitensignalsensors überbrücken lässt.

In der in diesem Ausführungsbeispiel beschriebenen Lösung kann das Fahrzeugsystem den ADAS-Horizont sogar ganz ohne Navigationsgerät und Kartenbasis erstellen. Dabei wird dieses Ausführungsbeispiel unter Bezugnahme auf Figur 2 beschrieben.

In diesem Ausführungsbeispiel ist das Kartenabgleichmodul 29 derart ausgelegt, dass es dem ADAS-Horizontprovider 22 selbst dann die nötigen Eingangsparameter zur Verfügung stellen kann, wenn keine digitale Karte vorliegt. Das heißt, liegt eine digitale Karte vor, wie im ersten Ausführungsbeispiel beschrieben, dann können mit der nachfolgend beschriebenen Methodik die Kartendaten gestützt werden oder es kann damit eine Redundanz für diese Daten erreicht werden, um beispielsweise Fehler zu erkennen und korrigieren zu können. Diese Fusion führt zu einer höheren Verfügbarkeit und Qualität des ADAS-Horizonts sowie zu einer Redundanz für den ADAS-Horizont auf Basis digitaler Karten, was die Verfügbarkeit und Sicherheit erhöht, da durch eine Fusion beider Quellen ein verbesserter ADAS-Horizont ermöglicht wird, wie dies bereits oben, im Zusammenhang mit dem ersten Ausführungsbeispiel beschrieben wurde.

Dieses vierte Ausführungsbeispiel geht noch einen Schritt weiter und stellt auch dann einen ADAS-Horizont zur Verfügung, wenn zeitweise oder dauerhaft keine digitale Karte und/oder Navigationssatellitensignal zur Verfügung steht. In diesem Fall ist das Kartenabgleichmodul 29 derart ausgelegt, dass es auch nur auf Basis der Sensoren 14, insbesondere der Umfeldsensoren, die für die Erstellung des ADAS-Horizonts nötigen Eingangsparameter zur Verfügung zu stellen.

Dazu ermöglicht dieses Ausführungsbeispiel, mittels Umfeldsensoren, eine Repräsentation der Umgebung zu erhalten. So können Videosensoren die Fahrspur und Verkehrsschilder erkennen, Radar- bzw. Lidar- oder Ultraschallsensoren liefern Daten über Fahrzeuge oder allgemein Objekte in der Umgebung, usw. Diese Daten können verwendet werden, um eine Bahnvorhersage (bzw. Straßenvorhersage) zu erstellen. Zusätzlich können Fahrzeugsensoren, wie beispielsweise ein Lenkradwinkelsensor, Raddrehzahlsensor, Gierratensensor, usw. dazu verwendet werden, über ein Fahrzeugmodell die Informationen der Umfeldsensoren zu stützen, zu interpolieren oder zu extrapolieren. Diese durch die Sensoren 14 erfassten Daten werden dann als Eingangsparameter verwendet, um basierend auf diesen Daten einen ADAS-Horizont zu erstellen. Dieser ADAS-Horizont kann verwendet werden, um einen kartenbasierten ADAS-Horizont zu ersetzen, falls keine digitale Karte im Fahrzeug 10 verfügbar ist.
Der so erstellte ADAS-Horizont kann auch der Navigationseinheit 12 oder dem Navigationsmodul 20 zur Verfügung gestellt werden, falls das aktuelle Umfeld in den Kartendaten der Navigationseinheit 12 nicht enthalten ist. Somit können diese umfeldsensorbasierten Daten auch als Grundlage für die Navigation verwendet werden bzw. fehlerhafte Navigationsinformationen unterdrücken.

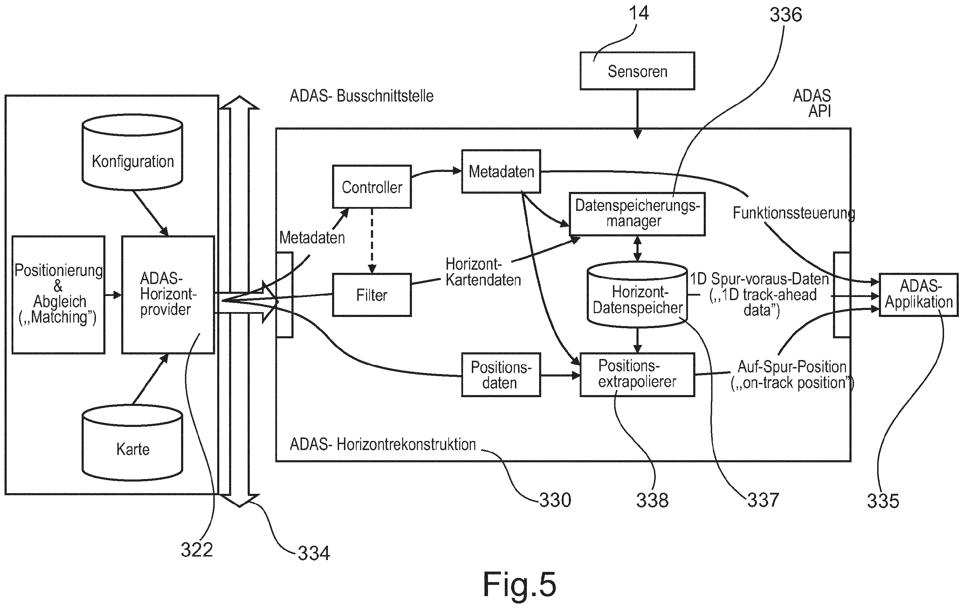

Figur 5 zeigt ein fünftes Ausführungsbeispiel des Fahrzeugsystems. Dieses Ausführungsbeispiel kann mit den vorhergehend beschriebenen Ausführungsbeispielen kombiniert werden.
Wie bereits vorstehend beschrieben, werden zur Verwendung von digitalen Karten im Fahrerassistenzsystem, diese in einen ADAS-Horizont umgewandelt. Bei diesem wird von dem ADAS-Horizontprovider 322 ein virtueller ADAS-Horizont per sequenziellem Update über einen CAN-Bus 334 oder einem anderen Fahrzeugbus an angeschlossene Geräte verschickt und in diesen durch das ADAS-Horizont-Rekonstruktionsmodul 330 zu einem virtuellen Horizont zusammengefügt, wie in Figur 5 dargestellt.
Sämtliche Informationen über die Beschaffenheit des virtuellen Horizonts bzw. ADAS-Horizonts müssen bei diesem Vorgehen im ADAS-Horizontprovider 322 vorhanden sein. Zusätzliche Informationen, die diesem nicht vorliegen, können erst auf Ebene der ADAS-Applikation 335 hinzugefügt werden.

Gemäß diesem fünften Ausführungsbeispiel werden vorliegende zusätzliche Informationen, die für den virtuellen Horizont hilfreich sind, im ADAS-Horizont-Rekonstruktionsmodul 330 in den virtuellen Horizont eingefügt und über die ADAS-Applikationsprogrammschnittstelle (API "Applikation Programm Interface") bzw. das ADAS-Horizont-Rekonstruktionsmodul 330 zur Verfügung gestellt. Vorzugsweise erfolgt dieses Einfügen im Bereich eines Datenspeichermanagers ("data store manager") 336, eines Horizont-Datenspeichers ("horizon data store") 337 und eines Positionsextrapolierers ("position extrapolator") 338. An diesen Stellen können zusätzliche Informationen für die Anpassung bzw. Veränderung des ADAS-Horizonts berücksichtigt werden. Hierbei entsprechen die Module des Datenspeichermanagers 336, des Horizont-Datenspeichers 337 und des Positionsextrapolierers 338 der aktuellen Systemdefinition des ADASIS-Forums. Erfolgt eine Änderung dieser Systemdefinition oder wird ein anderer Systemaufbau verwendet, so erfolgt das Einfügen an dann passenden Stellen des ADAS-Horizont-Rekonstruktionsmoduls.

Beispielsweise kann ein Umfeldsensor erfassen, welche zusätzlichen Objekte sich auf der Straße befinden und welchen Abstand diese zum Fahrzeug haben, sowie deren Geschwindigkeit. Diese Informationen werden in der aktuellen ADASIS-Architektur vorzugsweise im Datenspeichermanager 336 eingefügt.

Darüber hinaus kann ein Sensor Umweltinformationen über den Straßenzustand erfassen. Hierbei kann beispielsweise durch einen Bremsvorgang eines elektronischen Bremssystems ein niedriger Reibwert erkannt werden. Über einen Regensensor oder betätigten Scheibenwischer kann Nässe erkannt werden. Eine potentielle Vereisung der Straße kann aus der Kombination von Temperatur nahe des Gefrierpunktes und dem Passieren einer Brücke erkannt werden, usw.

Ferner können über einen Verkehrsnachrichtenkanal (TMC = "Traffic Message Channel") oder über Echtzeit-Verkehrsinformationen (RTTI = "Real Time Traffic Information") Informationen über Staus, Straßensperrungen, usw. erfasst und im Bereich des Datenspeichermanagers 336 bei der Handhabung des ADAS-Horizonts berücksichtigt werden.

Darüber hinaus können über einen Telematikdienst zusätzliche Informationen über den Verkehrsfluss und zusätzliche Informationen zu einigen oder allen POIs ("Points of Information") gewonnen werden und im Bereich des Datenspeichermanagers 336 bei der Modifikation des ADAS-Horizonts berücksichtigt werden.

Alternativ wird aus den Ausgaben von Umfeldsensoren auf den Verkehrsfluss geschlossen. In diesem Zusammenhang ist es beispielsweise möglich mit Hilfe von Radar auf Kolonnenverkehr zu schließen, falls Abstand zwischen den Fahrzeugen gering und gleichzeitig auch die Fahrgeschwindigkeit gering ist. Ferner kann der per Umfeldsensorik erfasste Verkehrsfluss verwendet werden, um die passende Eigengeschwindigkeit des eigenen Fahrzeugs 10 vorherzusagen.
Durch die Verwendung von zusätzlichen Informationen innerhalb des ADAS-Horizont-Rekonstruktionsmodul 330 können dynamische Daten berücksichtigt werden, die durch den ADAS-Horizontprovider 322, der oft im getrennten Navigationssystem vorgesehen ist, nicht berücksichtigt werden oder nicht berücksichtigt werden können. Da die Daten schon im ADAS-Horizont-Rekonstruktionsmodul 330 eingearbeitet werden, muss keine Änderung mehr in der ADAS-Applikation 335 erfolgen, so dass diese dynamischen Daten allen dem ADAS-Horizont-Rekonstruktionsmodul nachgeschalteten Systemen zur Verfügung stehen.

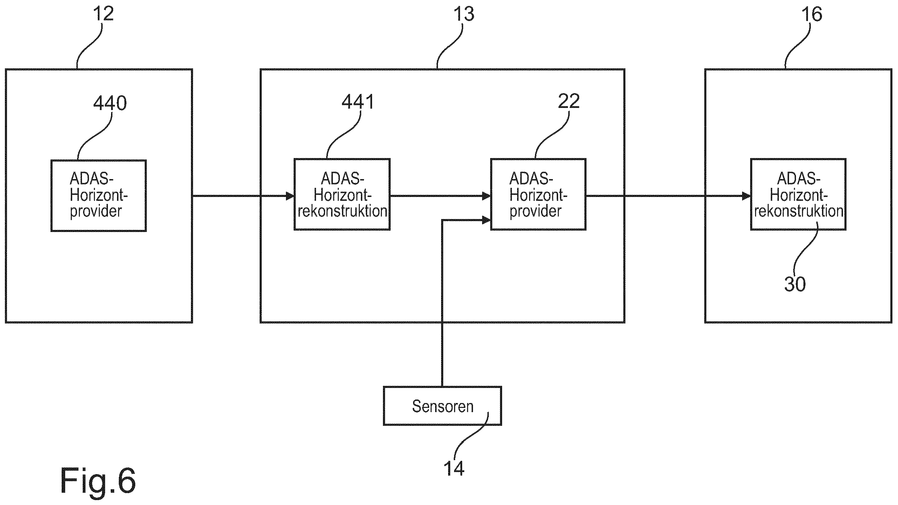

Figur 6 zeigt ein sechstes Ausführungsbeispiel des Fahrzeugsystems. Dieses Ausführungsbeispiel kann mit den vorhergehenden Ausführungsbeispielen kombiniert werden. Zur Vermeidung von Wiederholungen werden nur jene Aspekte beschrieben, die sich von den vorhergehenden Ausführungsbeispielen unterscheiden.
Ergänzend ist in diesem Ausführungsbeispiel die Navigationseinheit 12 mit einem eigenen ADAS-Horizontprovider 440 versehen, der basierend auf den Kartendaten in der Navigationseinheit 12 und der seitens der Navigationseinheit 12 zur Verfügung gestellten aktuellen Fahrzeugposition einen ADAS-Horizont bereitstellt. Dieser ADAS-Horizont wird von der Navigationseinheit 12 an die Providereinheit 13 weitergegeben. Innerhalb der Providereinheit 13 ist ein ADAS-Horizontrekonstruktionsmodul 441 vorgesehen, welches den ADAS-Horizont vom ADAS-Horizontprovider 440 empfängt entsprechend aufbereitet (z.B. dekomprimiert) und an den in der Providereinheit 13 vorgesehenen ADAS-Horizontprovider 22 weitergibt. Der ADAS-Horizontprovider empfängt darüber hinaus separat Ausgaben der Sensoren 14 und eventuell zusätzlich von dem Satellitensignalempfänger 15. Wird von der Navigationseinheit 12 ein ADAS-Horizont zur Verfügung gestellt, dann wird dieser ADAS-Horizont basierend auf den Ausgaben der Sensoren 14, 15 modifiziert, d.h. verbessert, und anschließend an das ADAS-Horizontrekonstruktionsmodul 30 des Fahrerassistenzsystems 16 ausgegeben. Die übrigen Elemente aus den vorhergehenden Ausführungsbeispielen sind nicht in Figur 6 dargestellt und auch hier aus Gründen der Übersichtlichkeit nicht erwähnt, jedoch sei explizit darauf hingewiesen, dass diese Elemente an den geeigneten Stellen vorgesehen sein können und im Rahmen dieses Ausführungsbeispiels nur die zusätzlich dazu vorgesehenen Elemente beschrieben sind, d.h. dass beispielsweise zwischen dem ADAS-Horizontprovider 440 und dem ADAS-Horizontprovider 22 neben dem ADAS-Horizontrekonstruktionsmodul auch noch der Kartencachespeicher 26, das Lokalkartenmodul 28, das Kartenabgleichsmodul 29 und der Kartenupdateprovider 25 usw. vorgesehen sein können.

Es sei explizit darauf hingewiesen, dass Merkmale, die mit Verweis auf eines der obigen Ausführungsbeispiele oder der obigen Weiterentwicklungen beschrieben worden sind, im Rahmen des durch die Ansprüche definierten Schutzumfangs auch mit Merkmalen anderer oben beschriebener Ausführungsbeispiele oder Weiterentwicklungen kombiniert werden können.

## Patentansprüche

1. Fahrzeug mit einem Fahrzeugsystem (11, 111, 211) zur Kartenverifikation, mit:
einem Versionsspeicher (233), in dem ein Kartenupdate getrennt von einer bereits vorhandenen Karte speicherbar ist;
einem Updatemodul (232), über welches das Kartenupdate zur Speicherung in dem Versionsspeicher (223) einspielbar ist;
einem Positionssensor;
zumindest einem Fahrzeugsensor, Umfeldsensor und/oder Verkehrstelematikempfänger (14, 114),
wobei der zumindest eine Fahrzeugsensor ein Wegstreckensensor, Geschwindigkeitssensor, Lenkradwinkelsensor, Raddrehzahlsensor oder Gierratensensor ist,
**gekennzeichnet durch** einen Kartenupdateprovider (25, 225), welcher derart ausgelegt ist, dass er das in dem Versionsspeicher gespeicherte Kartenupdate und die bereits vorhandene Karte mit den Ausgaben des Fahrzeugsensors, Umfeldsensors und/oder Verkehrstelematikempfängers (14, 114) vergleicht und auf Plausibilität prüft, wobei das Fahrzeugsystem jene Karte zur Benutzung freigibt, die besser mit den Ausgaben des Fahrzeugsensors, Umfeldsensors und/oder Verkehrstelematikempfängers (14, 114) übereinstimmt.

2. Fahrzeug mit einem Fahrzeugsystem (11, 111, 211) gemäß Anspruch 1, wobei das Fahrzeugsystem so ausgelegt ist, dass der vorhandene Kartenausschnitt, mit dem aktualisierten Kartenausschnitt aus dem Updatemodul (232) überschreibbar ist, wenn der aktualisierte Kartenausschnitt eine höhere Übereinstimmung mit den Ausgaben des Fahrzeugsensors, Umfeldsensors und/oder Verkehrstelematikempfängers (14, 114) aufweist.

3. Verfahren zum Steuern eines Fahrzeugsystems (11, 111, 211) zur Kartenverifikation in einem Fahrzeug, mit den Schritten:
Einspielen eines Kartenupdates in ein Updatemodul (232) des Fahrzeugsystems;
Speichern des Kartenupdates in einem Versionsspeicher (233) des Fahrzeugsystems getrennt von einer bereits vorhandenen Karte und
Ermitteln einer Position mittels eines Positionssensors des Fahrzeugs;
**gekennzeichnet durch** den Schritt:
Vergleichen und Plausibilitätsprüfen des in dem Versionsspeichers gespeicherten Kartenupdates und die bereits vorhandene Karte mit den Ausgaben zumindest eines Fahrzeugsensors, Umfeldsensors und/oder Verkehrstelematikempfängers (14, 114) des Fahrzeugs,
wobei der zumindest eine Fahrzeugsensor ein Wegstreckensensor, Geschwindigkeitssensor, Lenkradwinkelsensor, Raddrehzahlsensor oder Gierratensensor ist und wobei jene Karte zur Benutzung freigegeben wird, die besser mit den Ausgaben des Fahrzeugsensors, Umfeldsensors und/oder Verkehrstelematikempfängers (14, 114) übereinstimmt.

## Claims

1. A vehicle with a vehicle system (11, 111, 211) for map verification having:
a version memory (233), in which a map update is storable separately from an already existing map;
an update module (232), via which the map update is mergeable for storage in the version memory (223);
a position sensor;
at least one vehicle sensor, surroundings sensor, and/or traffic telematics receiver (14, 114),
wherein the at least one vehicle sensor is a mileage sensor, a speed sensor, a steering-wheel angle sensor, a wheel rpm sensor, or a yaw rate sensor,
**characterized by** a map update provider (25, 225), which is designed such that it compares the map update stored in the version memory and the already existing map with the outputs of the vehicle sensor, surroundings sensor, and/or traffic telematics receiver (14, 114) and performs a plausibility check of the map update stored in the version memory and the already existing map, wherein the vehicle system releases that map for use which shows a higher degree of accordance with the outputs of the vehicle sensor, surroundings sensor, and/or traffic telematics receiver (14, 114).

2. The vehicle with a vehicle system (11, 111, 211) according to claim 1, wherein the vehicle system is designed such that the existing map detail can be overwritten with the updated map detail from the update module (232) if the updated map detail shows a higher degree of accordance with the outputs of the vehicle sensor, surroundings sensor, and/or traffic telematics receiver (14, 114).

3. A method for controlling a vehicle system (11, 111, 211) for map verification in a vehicle with the steps of:
merging a map update into an update module (232) of the vehicle system;
storing the map update in a version memory (233) of the vehicle system separately from an already existing map and determining a position by means of a position sensor of the vehicle;
**characterized by** the step of:
comparing and performing a plausibility check of the map update stored in the version memory and of the already existing map with the outputs of at least one vehicle sensor, surroundings sensor and/or traffic telematics receiver (14, 114) of the vehicle,
wherein the at least one vehicle sensor is a mileage sensor, a speed sensor, a steering-wheel angle sensor, a wheel rpm sensor or a yaw rate sensor and wherein that map which shows a higher degree of accordance with the outputs of the vehicle sensor, surroundings sensor and/or traffic telematics receiver (14, 114) is released for use.

## Revendications

1. Véhicule avec un système de véhicule (11, 111, 211) pour la vérification de cartes, avec :
une mémoire de version (233), dans laquelle une mise à jour de carte est enregistrable séparément d'une carte déjà existante ;
un module de mise à jour (232), par lequel la mise à jour de carte est chargeable pour l'enregistrement dans la mémoire de version (223) ;
un capteur de positionnement ;
au moins un capteur de véhicule, capteur d'environnement et/ou récepteur de télématique routière (14, 114),
l'au moins un capteur de véhicule étant un capteur de distance parcourue, capteur de vitesse, capteur d'angle de braquage, capteur de vitesse de rotation de roue ou capteur de taux de lacet,
**caractérisé par** un fournisseur de mise à jour de carte (25, 225), lequel est conçu de telle sorte qu'il compare la mise à jour de carte enregistrée dans la mémoire de version et la carte déjà existante avec les sorties du capteur de véhicule, capteur d'environnement et/ou récepteur de télématique routière (14, 114) et vérifie leur plausibilité, le système de véhicule autorisant la carte qui correspond le mieux aux sorties du capteur de véhicule, capteur d'environnement et/ou capteur de télématique routière (14, 114).

2. Véhicule avec un système de véhicule (11, 111, 211) selon la revendication 1, le système de véhicule étant conçu de telle sorte que la portion de carte existante est réinscriptible avec la portion de carte actualisée du module de mise à jour lorsque la portion de carte actualisée présente une correspondance plus élevée avec les sorties du capteur de véhicule, capteur d'environnement et/ou capteur de télématique routière (14, 114).

3. Procédé pour la commande d'un système de véhicule (11, 111, 211) pour la vérification de carte dans un véhicule, avec les étapes :
chargement d'une mise à jour de carte dans un module de mise à jour (232) du système de véhicule ;
enregistrement de la mise à jour de carte dans une mémoire de version (233) du système de véhicule séparément d'une carte déjà existante et
détermination d'une position au moyen d'un capteur de position du véhicule ;
**caractérisé par** l'étape :
comparaison et vérification de plausibilité de la mise à jour de carte enregistrée dans la mémoire de version et de la carte déjà existante avec les sorties d'au moins un capteur de véhicule, capteur d'environnement et/ou capteur de télématique routière (14, 114) du véhicule,l'au moins un capteur de véhicule étant un capteur de distance parcourue, capteur de vitesse, capteur d'angle de braquage, capteur de vitesse de rotation de roue ou capteur de taux de lacet et la carte correspondant le mieux avec les sorties du capteur de véhicule, capteur d'environnement et/ou capteur de télématique routière (14, 114) étant autorisée pour utilisation.
